# EUROPEAN PATENT APPLICATION

(11) **EP 3 598 896 A1**
(43) Date of publication of application: **29.01.2020**
(21) Application number: 19196297.6
(22) Date of filing: 04.12.2015
(51) Int. Cl.: A01N 1/02, A01N 59/08, A01N 59/26, C02F 1/461, C25B 1/04, A01P 1/00

(54) **ELECTROLYZED WATER COMPOSITION**

(30) Priority: 09.12.2014 GB 201421865; 19.10.2015 GB 201518476
(62) Divisional of application: 15808007.7
(71) Applicant: Ozo Innovations Ltd, Kidlington, Oxfordshire OX5 1FQ (GB)
(72) Inventor: GARDNER, Stephen Philip, Kidlington, Gloucestershire GL54 1DW (GB)
(74) Representative: Butler, Kathryn Louise

(57) **Abstract**

The present invention provides an aqueous electrolyte solution comprising at least four salts. The at least four salts are selected from: at least one salt selected from alkali metal chloride, alkali earth metal chloride, and ammonium chloride, or any combination thereof; at least one salt selected from alkali metal carbonate; alkali earth metal carbonate, and ammonium carbonate, or any combination thereof; at least one salt selected from alkali metal nitrate, alkali earth metal nitrate, and ammonium nitrate, or any combination thereof; and at least one salt selected from alkali metal phosphate, alkali earth metal phosphate, and ammonium phosphate, or any combination thereof.

## Description

### Field of the Invention

The present invention relates to an electrolyzed water composition, an apparatus and a method for preparing the electrolyzed water composition. The present invention also relates to the use of the electrolyzed water composition for the treatment of pathogens, including soil borne pathogens, and/or airborne diseases, within for example the agricultural industry. The present invention also relates to the use of the electrolyzed water compositions for extending the shelf life of cut flowers.

### Background

There are a number of soil borne pathogens, including *Fusarium,* which is a fungal plant pathogen that can significantly reduce yield and quality within a wide range of vegetable crops. These pathogens are ubiquitous, relatively non-selective, and are very difficult to control in any systemic fashion. Furthermore, these pathogens can survive in the soil for many years. Each crop may be susceptible to several different pathogens. Symptoms caused by the pathogens include: root decay, tissue discolouration, crown rot and wilting of foliage. In some cases these soil borne pathogens can destroy up to 100% of viable crops. As a result, these soil borne pathogens are a major concern to farmers and growers as the pathogens can cause significant financial losses.

Effective disease management options must be economical. The cost of managing the disease must be less than the value of the crops to be harvested. Current chemical treatments, such as for example pre-plant fumigants, are expensive and in most cases are strictly regulated. One of the last remaining effective chemical soil sterilisation treatments, methyl bromide/bromomethane, was withdrawn from market in 2008.

Another method for treating soil borne pathogens is steam sterilisation. The process involves burning diesel in order to create superheated steam that raises the temperature of the top portion (the top 6-9") of soil to approximately 90°C for about two hours. Typically, steam sterilisation requires burning approximately 3-4I of diesel per square meter of soil to be treated. This process can also take around 8 to 9 hours to treat 500m² at a cost of £4-£6/m². Steam sterilisation is labour intensive and has significant associated time, energy and cost implications. Furthermore, soil sterilisation uses live steam at 180°C - 200°C and therefore this process raises a number of Health and Safety issues. It has also been found that soil sterilisation is not always effective as instances of up to 100% crop failure have been reported.

In addition, crops are also susceptible to airborne diseases, such as for example downy and powdery mildew caused by any of several types of oomycete microbes, which also result in crop and/or yield loss.

A number of agricultural chemical controls which are currently used to protect crops against soil borne pathogens and/or air borne diseases are toxic to humans. As a result, the grower or farmer must use additional protective equipment and/or wear expensive protective clothing and breathing apparatus. Furthermore, the chemicals may not be used beyond a certain time point in the growing season prior to harvest in order to minimise the risk of chemical residues being present on or in the crops at harvest. The use of these chemicals also has associated environmental implications.

There is therefore a need for a biocidal composition with improved efficiency, lower associated energy and cost implications, and/or reduced environmental and health implications. There is also a need for a method of sterilising soil and/or treating agricultural crops which is quick, safe, cost effective and has reduced environmental implications. There is also a need for a method of treating agricultural crops which does not require any additional treatment apparatus.

In cut flower industry, there is a significant time delay, of up to 5 days, between flowers being cut and when a consumer purchases the cut flowers. After the initial cutting, the cut flowers may be packaged for a flight, flown into country and then shipped by road to a flower producer. The flowers are then processed by the flower producer, transported to a retail environment where the flowers are displayed on a shop floor, and then finally displayed in a consumer's home. During this time the health of the flowers can begin to deteriorate, for example the flowers may wilt and/or the petals may fall off. This often happens due to the build-up of bacterial biofilms, which clog up the vascular system of the plant stems and prevent the free transport of water and nutrients through the plant.

The cut flowers are therefore typically stored, transported and displayed within the retail environment within a rehydration solution in order to minimise the deterioration of the flowers. Cut flowers are often guaranteed to remain in good health for a certain period of time within the consumer's home. It is therefore important that the rehydration solution is effective in maintaining the health of the cut flowers in order to minimise any guarantee claims from the consumers.

There is therefore a need for an effective rehydration composition with improved antimicrobial efficiency, low associated energy and cost implications, and/or reduced environmental and health implications. There is a need for a rehydration composition for improving the shelf life of cut flowers. There is also a need for a method of treating and/or storing cut flowers which is quick, safe, cost effective, maintains the flowers' health over an extended time period and has reduced environmental implications.

### Summary of the Invention

According to a first aspect, the present invention provides a method for producing an electrolyzed water composition for agricultural use, the method comprising:
preparing an electrolyte solution comprising water and a mixture of at least four salts, in which the salts are selected from acidic, basic or neutral salts, and any combination thereof;
introducing the aqueous electrolyte solution into an electrolytic cell comprising a plurality of boron-doped diamond electrodes; and
operating a power supply to apply a predetermined voltage to the electrolyte solution to produce an electrolyzed water biocidal composition comprising a plurality of active molecular and ionic species having biocidal activity,
in which the mixture of at least four salts of the electrolyte are selected such that the electrolyzed water biocidal composition comprises a free accessible chlorine (FAC) concentration in the range of from 10 to 1,000 ppm, and/or a dissolved O₃ concentration in the range of from 0.1 to 750ppm.

The electrolyte solution may be introduced into the electrolytic cell in a continuous or batch process manner.

The predetermined voltage may be in the range of between about 1 and 1000 volts DC.

The power supply may have a current in the range of between about 1 and 1000 ampere.

According to a second aspect, there is provided an electrolyte solution preferably comprising at least four salts selected from the group comprising: alkali metal salts, alkali earth metal salts, ammonium salts, and any combination thereof. Preferably, the electrolyte comprises at least four salts selected from alkali metal salts and alkali earth metal salts. The alkali metal salts, alkali earth metal salts, ammonium salts are preferably selected from chlorides, phosphates, carbonates, nitrates, thiosulfates, sulfates, and any combination thereof.

The term 'phosphate' is used to include monophosphates, diphosphates, triphosphates, and polyphosphates including cyclic polyphosphates, and combinations thereof.

Preferably, the electrolyte solution comprises at least one salt selected from alkali metal chloride, alkali earth metal chloride, and ammonium chloride, or any combination thereof. Preferably, the electrolyte solution comprises at least one alkali metal chloride and at least one alkali earth metal chloride.

Preferably, the electrolyte solution comprises at least four salts, in which the at least four salts are selected from:
at least one salt selected from alkali metal chloride, alkali earth metal chloride, and ammonium chloride, or any combination thereof; and
at least one salt selected from alkali metal carbonate, nitrate, sulphate or phosphate; alkali earth metal carbonate, nitrate, sulphate or phosphate; and ammonium carbonate, nitrate, sulphate or phosphate, or any combination thereof.

Preferably, the electrolyte solution comprises at least four salts, in which the at least four salts are selected from:
at least one salt selected from alkali metal chloride, alkali earth metal chloride, and ammonium chloride, or any combination thereof; and
at least one salt selected from alkali metal carbonate, nitrate, sulphate or phosphate; alkali earth metal nitrate, sulphate or phosphate; and ammonium carbonate, nitrate, sulphate or phosphate, or any combination thereof.

Preferably the electrolyte solution comprises:
at least one salt selected from alkali metal chloride, alkali earth metal chloride, and ammonium chloride, or any combination thereof;
at least one salt selected from alkali metal carbonate; alkali earth metal carbonate, and ammonium carbonate, or any combination thereof;
at least one salt selected from alkali metal nitrate, alkali earth metal nitrate, and ammonium nitrate, or any combination thereof; and
at least one salt selected from alkali metal phosphate, alkali earth metal phosphate, and ammonium phosphate, or any combination thereof.

Preferably, the ratio by weight of the total concentration of phosphate salt(s): nitrate salt(s): carbonate salt(s): chloride salts(s) within the electrolyte is at least 1:2:1:5; more preferably at least 1:3:2:7, for example approximately 1:4:3:9.

Preferably the electrolyte solution comprises:
at least one alkali metal chloride salt and at least one alkali earth metal chloride salt;
at least one alkali metal carbonate salt;
at least one alkali metal nitrate salt and at least one alkali earth metal nitrate salt; and
at least one alkali metal phosphate salt and/or at least one alkali earth metal phosphate salt.

Preferably the at least one alkali metal phosphate salt is a monophosphate salt.

Preferably, the ratio by weight of the at least one alkali earth metal chloride salt to the at least one alkali metal chloride salt is at least 1:1, preferably at least 2:1, more preferably at least 5:1, for example approximately 5.5:1. Preferably, the ratio by weight of the at least one alkali earth metal chloride salt to the at least one alkali metal chloride salt is no more than 16:1, more preferably no more than 12: 1, for example no more than 10:1.

Preferably, the ratio by weight of the alkali metal carbonate salt(s) to the at least one alkali metal chloride salt is at least 3:1, preferably at least 4:1, for example approximately 5.33:1. Preferably, the ratio by weight of the alkali metal carbonate salt(s) to the alkali metal chloride salt(s) is no more than 16:1, preferably no more than 12:1, for example no more than 10:1.

Preferably, the ratio by weight of the at least one alkali metal nitrate salt to the at least one alkali metal chloride salt is at least 1:1, more preferably at least 2:1, for example approximately 2.67:1. The ratio by weight of the at least one alkali metal nitrate salt to the at least one alkali metal chloride salt is preferably no more than 8:1, more preferably no more than 6:1, for example no more than 5:1.

Preferably, the ratio by weight of the at least one alkali earth metal nitrate to the at least one alkali metal chloride salt is at least 1:1, more preferably at least 2:1, for example about 2.67:1. The ratio by weight of the at least one alkali earth metal nitrate to the at least one alkali metal chloride salt is preferably no more than 8:1, more preferably no more than 6:1, for example no more than 5:1.

Preferably, the ratio by weight of the at least one alkali earth metal nitrate salt to the at least one alkali metal nitrate is at least 0.5:1, preferably at least 0.75:1, more preferably at least 1:1. The ratio by weight of the at least one alkali earth metal nitrate salt to the at least one alkali metal nitrate is preferably no more than 3:1, more preferably no more than 2.5:1, for example no more than 2:1.

Preferably, the ratio by weight of the at least one alkali metal phosphate salt to the at least one alkali metal chloride salt is at least 1.5:1, more preferably at least 2:1, for example at least 3:1. The ratio by weight of the at least one alkali metal phosphate salt to the at least one alkali metal chloride salt is preferably no more than 9:1, more preferably no more than 7:1, for example no more than 5:1.

Preferably, the at least one alkali metal chloride salt is selected from sodium chloride and/or potassium chloride. More preferably, the alkali chloride salt(s) is sodium chloride.

Preferably, the at least one alkali earth metal chloride salt is selected from calcium chloride and/or magnesium chloride. More preferably, the at least one alkali earth metal chloride salt is calcium chloride.

Preferably, the alkali metal carbonate salt is anhydrous sodium carbonate.

Preferably, the at least one alkali earth metal nitrate salt is selected from: magnesium nitrate (Mg(NO₃)₂), calcium nitrate Ca(NO₃)₂ and/or calcium ammonium nitrate 5Ca(NO₃)₂.NH₄NO₃·10H₂O, or any combination thereof.

Preferably, the alkali metal nitrate salt(s) is selected from: sodium nitrate (NaNO₃) and potassium nitrate (KNO₃), or any combination thereof. Preferably, the alkali metal nitrate salt is sodium nitrate.

Preferably, the alkali metal phosphate salt(s) is selected from mono potassium phosphate (KH₂PO₄) and mono sodium phosphate (NaH₂PO₄), or any combination thereof.

Preferably, the alkali earth metal phosphate salt(s) is selected from calcium phosphate Ca(H₂PO₄)₂

Preferably, the electrolyte solution comprises:
sodium chloride (NaCI) and calcium chloride (CaCl₂);
anhydrous sodium carbonate (Na₂CO₃);
magnesium nitrate (Mg(NO₃)₂) and one or more alkali metal nitrate selected from: sodium nitrate (NaNO₃) and potassium nitrate (KNO₃), or any combination thereof; and
one or more alkali metal phosphate selected from: mono potassium phosphate (KH₂PO₄) and mono sodium phosphate (NaH₂PO₄), or any combination thereof.

Preferably, the electrolyte solution comprises:
sodium chloride (NaCI) and calcium chloride (CaCl₂);
anhydrous sodium carbonate (Na₂CO₃);
magnesium nitrate (Mg(NO₃)₂) and sodium nitrate (NaNO₃); and
mono sodium phosphate (NaH2PO₄).

The electrolyte solution preferably comprises: 0.05 g/l sodium chloride (NaCI); 0.267 g/l calcium chloride (CaCl₂); 0.267 g/l anhydrous sodium carbonate (Na₂CO₃); 0.133 g/l magnesium nitrate (Mg(NO₃)₂); 0.133 g/l potassium nitrate (KNO₃); and 0.15 g/l mono potassium phosphate (KH₂PO₄).

According to a further aspect, the present invention provides an apparatus for producing electrolyzed water composition for use in disinfecting an area, the apparatus comprising:
a reservoir comprising an electrolyte solution comprising water and a mixture of at least four salts, in which the salts are selected from acidic, basic or neutral salts, and any combination thereof;
an electrolytic flow cell in fluid communication with the reservoir to receive a feed stream comprising the aqueous electrolyte solution; and
a plurality of boron-doped diamond electrodes located within the electrolytic cell and arranged in use to be connected to a power supply.

According to a still further aspect, the present invention provides an electrolyzed water composition obtainable by a method as herein described.

According to a still further aspect, the present invention provides an electrolyzed water composition obtained by a method as herein described.

The electrolyzed water biocidal composition preferably comprises a free accessible chlorine (FAC) concentration in the range of from 10 to 1000 ppm, for example approximately 350 ppm.

The electrolyzed water biocidal composition preferably comprises a dissolved O₃ concentration of in the range of from 0.1 to 750 ppm, more preferably from 1 to 300 ppm, for example approximately 2.5 ppm.

According to a still further aspect, the present invention provides use of the electrolyzed water composition as herein described as a biocidal agent. The term 'biocidal agent' includes pesticides, such as for example but not limited to fungicides, herbicides, insecticides, and algicides, and antimicrobial agents, such as for example but not limited to germicides, antibacterials, antivirals, antifungals and antiparasites. The electrolyzed water composition may be used to treat and/or control *Fusarium* and/or downy mildew on agricultural crops.

According to a still further aspect, the present invention provides an applicator for treating agricultural crops, in which the applicator comprises a reservoir comprising an electrolyzed water composition as herein described, and a nozzle in fluid communication with the reservoir. The applicator may comprise a reservoir which is adapted to be releasably engaged to existing agricultural equipment, such as for example an irrigation system, such that the electrolyzed water composition replaces the standard irrigant water during the treatment process.

The applicator may be selected from one or more of: a nebuliser, a fogging mist applicator, a jet spray applicator, a spray applicator, or an irrigation system, or any combination thereof. The nozzle may be provided by an existing irrigation system located within the agricultural area.

The term "disinfection" is used herein to refer to the use of the composition of the present invention to destroy microorganisms on an area to which the composition is applied. Disinfection does not necessarily kill all microorganisms on the area. The term "disinfection" is to be understood as also including the removal of viable spores.

The compositions of the present invention may be used to disinfect an area. The term "area" is used herein to refer to surfaces, including hard surfaces, substrates, objects, and air.

According to a further aspect, the present invention provides a method for producing an electrolyzed water composition for ornamental preservation, the method comprising:
preparing an electrolyte solution comprising water and a mixture of at least four salts, in which the salts are selected from acidic, basic or neutral salts, and any combination thereof;
introducing the aqueous electrolyte solution into an electrolytic cell comprising a plurality of boron-doped diamond electrodes; and
operating a power supply to apply a predetermined voltage to the electrolyte solution to produce an electrolyzed water composition comprising a plurality of active molecular and ionic species having rehydration activity, in which the mixture of at least four salts of the electrolyte are selected such that the electrolyzed water composition comprises a free accessible chlorine (FAC) concentration in the range of from 10 to 1,000 ppm, and/or a dissolved O₃ concentration in the range of from 0.1 to 750ppm.

The electrolyte solution may be introduced into the electrolytic cell in a continuous or batch process manner.

The predetermined voltage may be in the range of between about 1 and 1000 volts DC.

The power supply may have a current in the range of between about 1 and 1000 ampere.

According to a still further aspect, there is provided an electrolyte solution comprising at least four salts selected from the group comprising: alkali metal salts, alkali earth metal salts, ammonium salts, and any combination thereof.

Preferably, the electrolyte solution comprises at least four salts selected from the group comprising: alkali metal salts, alkali earth metal salts, ammonium salts, and any combination thereof. The alkali metal salts, alkali earth metal salts, ammonium salts are preferably selected from chlorides, phosphates, carbonates, nitrates, thiosulfates, sulfates, and any combination thereof. The alkali metal salts and/or alkali earth metal salts are preferably selected from chlorides and/or nitrates.

Preferably, the at least four salts are selected from the group comprising: alkali metal chlorides, alkali metal phosphates, alkali metal carbonates, alkali metal nitrates, alkali metal thiosulfates, alkali metal sulfates, alkali earth metal chlorides, alkali earth metal phosphates, alkali earth metal carbonates, alkali earth metal nitrates, alkali earth metal thiosulfates, alkali earth metal sulfates, ammonium chloride, ammonium phosphate, diammonium phosphate, ammonium dihydrogenphosphate, ammonium carbonate, ammonium nitrate, ammonium thiosulfate, ammonium sulphate, and any combination thereof.

The term 'phosphate' is used to include monophosphates, diphosphates, triphosphates, and polyphosphates including cyclic polyphosphates, and combinations thereof.

Preferably, the electrolyte solution comprises at least one carbonate salt selected from anhydrous alkali metal carbonate salts, and at least one chloride salt selected from: alkali metal chloride salts and/or alkali earth metal chloride salts;

Preferably, the electrolyte solution comprises at least one alkali metal chloride and at least one alkali earth metal chloride.

Preferably, the electrolyte solution comprises at least four salts, in which the at least four salts are selected from:
at least one salt selected from alkali metal chloride, alkali earth metal chloride, and ammonium chloride, or any combination thereof; and
at least one salt selected from alkali metal carbonate, nitrate, sulphate or phosphate; alkali earth metal carbonate, nitrate, sulphate or phosphate; and ammonium carbonate, nitrate, sulphate or phosphate, or any combination thereof.

Preferably, the ratio by weight of the total concentration of phosphate salt(s): nitrate salt(s): carbonate salt(s): chloride salts(s) by weight within the electrolyte is at least 1:2:1:5; more preferably at least 1:3:2:7, for example approximately 1:4:3:9.

Preferably the electrolyte solution comprises:
at least one alkali metal chloride salt and at least one alkali earth metal chloride salt;
at least one alkali metal nitrate salt and at least one alkali earth metal nitrate salt.

The electrolyte solution may additionally comprise at least one alkali metal phosphate salt and/or at least one alkali earth metal phosphate salt.

The electrolyte solution may further comprise at least one alkali metal carbonate salt;

Preferably the at least one alkali metal phosphate salt is a monophosphate salt.

Preferably, the ratio by weight of the at least one alkali earth metal chloride salt to the at least one alkali metal chloride salt by weight is at least 1:1, preferably at least 2:1, more preferably at least 5:1, for example approximately 5.5:1. Preferably, the ratio by weight of the at least one alkali earth metal chloride salt to the at least one alkali metal chloride salt by weight is no more than 16:1, more preferably no more than 12: 1, for example no more than 10:1.

Preferably, the ratio by weight of the alkali metal carbonate salt(s) to the at least one alkali metal chloride salt by weight is at least 3:1, preferably at least 4:1, for example approximately 5.33:1. Preferably, the ratio by weight of the alkali metal carbonate salt(s) to the alkali metal chloride salt(s) by weight is no more than 16:1, preferably no more than 12:1, for example no more than 10:1.

Preferably, the ratio by weight of the at least one alkali metal nitrate salt to the at least one alkali metal chloride salt by weight is at least 1:1, more preferably at least 2:1, for example approximately 2.67:1. The ratio by weight of the at least one alkali metal nitrate salt to the at least one alkali metal chloride salt by weight is preferably no more than 8:1, more preferably no more than 6:1, for example no more than 5:1.

Preferably, the ratio by weight of the at least one alkali earth metal nitrate to the at least one alkali metal chloride salt by weight is at least 1:1, more preferably at least 2:1, for example about 2.67:1. The ratio by weight of the at least one alkali earth metal nitrate to the at least one alkali metal chloride salt by weight is preferably no more than 8:1, more preferably no more than 6:1, for example no more than 5:1.

Preferably, the ratio by weight of the at least one alkali earth metal nitrate salt to the at least one alkali metal nitrate by weight is at least 0.5:1, preferably at least 0.75:1, more preferably at least 1:1. The ratio by weight of the at least one alkali earth metal nitrate salt to the at least one alkali metal nitrate by weight is preferably no more than 3:1, more preferably no more than 2.5:1, for example no more than 2:1.

Preferably, the ratio by weight of the at least one alkali metal phosphate salt to the at least one alkali metal chloride salt by weight is at least 1.5:1, more preferably at least 2:1, for example at least 3:1. The ratio by weight of the at least one alkali metal phosphate salt to the at least one alkali metal chloride salt by weight is preferably no more than 9:1, more preferably no more than 7:1, for example no more than 5:1.

Preferably, the at least one alkali metal chloride salt is selected from sodium chloride and/or potassium chloride. More preferably, the alkali chloride salt(s) is sodium chloride.

Preferably, the at least one alkali earth metal chloride salt is selected from calcium chloride and/or magnesium chloride. More preferably, the at least one alkali earth metal chloride salt is calcium chloride.

Preferably, the at least one alkali earth metal nitrate salt is selected from: magnesium nitrate (Mg(NO₃)₂), calcium nitrate Ca(NO₃)₂ and/or calcium ammonium nitrate 5Ca(NO₃)₂.NH₄NO₃·10H₂O, or any combination thereof. Preferably, the at least one alkali earth metal nitrate salt is magnesium nitrate.

Preferably, the alkali metal nitrate salt(s) is selected from: sodium nitrate (NaNO₃) and potassium nitrate (KNO₃), or any combination thereof. Preferably, the alkali metal nitrate salt is potassium nitrate.

Preferably, the alkali metal phosphate salt(s) is selected from mono potassium phosphate (KH₂PO₄) and mono sodium phosphate (NaH₂PO₄), or any combination thereof.

Preferably, the alkali earth metal phosphate salt(s) is selected from calcium phosphate Ca(H₂PO₄)₂

Preferably, the electrolyte solution comprises:
at least one alkali metal chloride salt;
at least one alkali earth metal chloride salt;
at least one salt selected from alkali metal nitrate; and
at least one salt selected from alkali earth metal nitrate.

Preferably, the electrolyte solution comprises:
sodium chloride (NaCI) and calcium chloride (CaCl₂);
magnesium nitrate (Mg(NO₃)₂) and one or more alkali metal nitrate selected from: sodium nitrate (NaNO₃) and potassium nitrate (KNO₃), or any combination thereof.

Preferably, the electrolyte solution comprises: sodium chloride (NaCI) and calcium chloride (CaCl₂); and magnesium nitrate (Mg(NO₃)₂) and potassium nitrate (KNO₃). Preferably, the electrolyte solution comprises: 0.3 g/l sodium chloride (NaCI);1.6 g/l calcium chloride (CaCl₂); 0.13 g/l magnesium nitrate (Mg(NO₃)₂); 2.8 g/l potassium nitrate (KNO₃).

The electrolyte solution may further comprise one or more alkali metal phosphate selected from: mono potassium phosphate (KH₂PO₄) and mono sodium phosphate (NaH₂PO₄), or any combination thereof.

The electrolyte may further comprise anhydrous sodium carbonate (Na₂CO₃);

According to a further aspect, the present invention provides an apparatus for producing electrolyzed water composition for use in rehydrating cut flowers, the apparatus comprising:
a reservoir comprising an electrolyte solution comprising water and a mixture of at least four salts, in which the salts are selected from acidic, basic or neutral salts, and any combination thereof;
an electrolytic flow cell in fluid communication with the reservoir to receive a feed stream comprising the aqueous electrolyte solution; and
a plurality of boron-doped diamond electrodes located within the electrolytic cell and arranged in use to be connected to a power supply.

According to a still further aspect, the present invention provides an electrolyzed water composition obtainable by a method as herein described.

The electrolyzed water composition preferably comprises a free accessible chlorine (FAC) concentration in the range of from 10 to 1000 ppm, for example approximately 250 ppm.

The electrolyzed water composition preferably comprises a dissolved O₃ concentration of in the range of from 0.1 to 750 ppm, more preferably from 1 to 300 ppm, for example approximately 2.5 ppm.

According to a still further aspect, the present invention provides use of the electrolyzed water composition as herein described as a rehydration solution for cut flowers.

The concentrations of salts within different electrolysed water compositions will be tailored to the specific flower species and transport regime. Different flowers have different tolerances for different salts, and many salts also have fertiliser and micro-nutrient effects at low concentrations. The specific blend of salts for each flower is designed in order to provide the maximum overall salt concentration that is consistent with keeping each individual salt in its micro-nutrient (and therefore non-phytotoxic) window for that species, whilst allowing the solution to be efficiently electrolysed. The use of multiple salts allow for creating non-phytotoxic electrolytic solutions.

### Brief Description of Figures

Embodiments of the present invention will now be described, by way of example, with reference to the following figures:
Figures 1A and 1B are photographic images illustrating the fungal colony growth of *Fusarium*;
Figures 1C and 1D are photographic images illustrating the fungicidal effect with regards to *Fusarium* of being treated with a strong solution of an electrolyzed water composition of Example 1 and a weak solution of an electrolyzed water composition of Example 1;
Figure 2 is a graphical representation comparing the effect of applying the composition of Example 1, and two other electrolyzed water compositions of the present invention, and known pesticide Revus to downy mildew infected lettuce;
Figure 3 is a photographic image illustrating the rehydration effect of the electrolyzed water composition of Example 4 on cut flowers;
Figure 4A is a photographic image illustrating the condition of roses rehydrated with varying solutions at a time period of two days post rehydration;
Figure 4B is a photographic image illustrating the condition of roses rehydrated with varying solutions at a time period of four days post rehydration; and
Figure 4C is a photographic image illustrating the condition of roses rehydrated with varying solutions at a time period of eight days post rehydration.

### Detailed Description

### Example 1 - Electrolyzed water composition

An aqueous electrolyte solution comprising 0.05 g/l sodium chloride, 0.267 g/l calcium chloride, 0.267 g/l anhydrous sodium carbonate, 0.133 g/l magnesium nitrate, 0.133 g/l potassium nitrate and 0.15 g/l mono potassium phosphate in water was prepared. The electrolyte solution was stored within a reservoir chamber in fluid communication with an electrolytic cell.

A feed stream comprising the electrolyte solution was introduced into an electrolytic flow cell. The feed stream can optionally include one or more additional salts to enhance the biocidal properties of the resultant electrolyzed water composition.

The electrolytic cell is a non-membrane electrolytic cell. It is however to be understood that any suitable electrolytic cell may be used.

The electrolytic cell comprises a casing, a plurality of boron doped diamond electrodes (BDEs) located within the cell, and metal 'contact plates' used for transmitting charge across the electrolyte solution.

The BDEs are sheet-like components and are provided in a stack of between 3 and 10 sheets. Each sheet is located at a fixed distance away from an adjacent sheet. The distance between adjacent sheets of BDEs provides a cell gap, which is preferably less than 5 mm, for example between approximately 2 and 3 mm. The BDEs are provided in a plastic frame. The BDEs transmit charge across the electrolyte solution, inducing a strong dipole and creating positively and negatively charged radicals on alternate surfaces of the diamonds.

The electrolyte solution may be introduced into the electrolytic cell in any suitable manner so as to produce electrolyzed water composition in a continuous process or in a batch process. In the continuous process, the electrolyte solution may be introduced at a suitable flow rate, such as for example at a flow rate in the range of from 0.1 to 100 I/min, for example in the range of from 3 to 5 I/min. In the batch process, the electrolyte solution may have a flow rate of approximately 16 I/min.

A power supply was operated to apply a voltage in the range of between 1 and 1,000 Volt D.C. and a current within the range of from 1-1,000 ampere to the electrolyte solution.

The over-potential provided between the electrodes shifts the equilibrium within the electrolyte solution such that a range of 'active species' ions and molecules are produced and remain within the electrolyzed water for a significant amount of time. The term 'significant amount of time' is used herein to refer to at least a week, preferably at least two weeks, for example at least a month. The combination of active molecular and ionic species together with the over-potential which supports the equilibrium confers a variable degree of biocidal activity to the electrolyzed water composition.

The electrolytic cell preferably comprises an outlet through which the electrolyzed water composition exits the cell. The resulting electrolyzed water composition comprises a range of active molecular and ionic species which have biocidal properties.

The active molecular and ionic species include dissolved ozone and free accessible chlorine (FAC). The electrolyzed water composition according to this embodiment comprises dissolved ozone at a level of approximately 2.5 ppm. The electrolyzed water composition according to this embodiment comprises free accessible chlorine (FAC) at a level of approximately 350 ppm.

Although the electrolyzed water composition of the present invention contains dissolved ozone at a level of approximately 2.5 ppm, it is to be understood that the electrolyzed water composition of the present invention may comprise any suitable level of dissolved ozone within the range of between 0.1 and 750 ppm. Although the electrolyzed water composition of the present invention contains and FAC at a level of approximately 350 ppm, it is to be understood that the electrolyzed water composition of the present invention may comprise any suitable level of FAC within the range of between 10 and 1,000 ppm.

It is also to be understood that the electrolyzed water composition may be varied by varying one or more of: the components of the electrolyte composition, the concentration of the components within the electrolyte composition, the degree of over-potential, the current applied, or any combination thereof. In this way the biocidal properties of the electrolyzed water biocidal composition may be tailored to suit different agricultural targets, such as for example crops, pathogens, delivery mechanism, and time points, or any combination thereof. For example, the biocidal properties of the electrolyzed water biocidal composition may be tailored in relation to when the composition is to be applied, such as for example during preparation of growing beds, during sowing and/or during growing seasons.

The system may further comprise one or more flow regulators arranged in use to adjust the flow of the electrolyte feed stream between the reservoir and the cell.

The system may further comprise a heater arranged in use to adjust the temperature of the flow of the electrolyte feed stream and/or the electrolyte solution within the cell.

The system may further comprise a control system arranged in use to control the flow rate of the electrolyte feed stream as required, such as for example by controlling the flow regulator(s).

The system may comprise a control system arranged in use to control the power supply to the electrodes.

The system may comprise a control system arranged in use to control the temperature of the electrolyte solution.

Control of the temperature of the electrolyte solution, the flow rate of the electrolyte solution feed stream, and the power supply to the electrodes may be provided by a single control system. Alternatively, these factors may be controlled by separate control systems.

### Example 2 - Fusarium control on soil samples

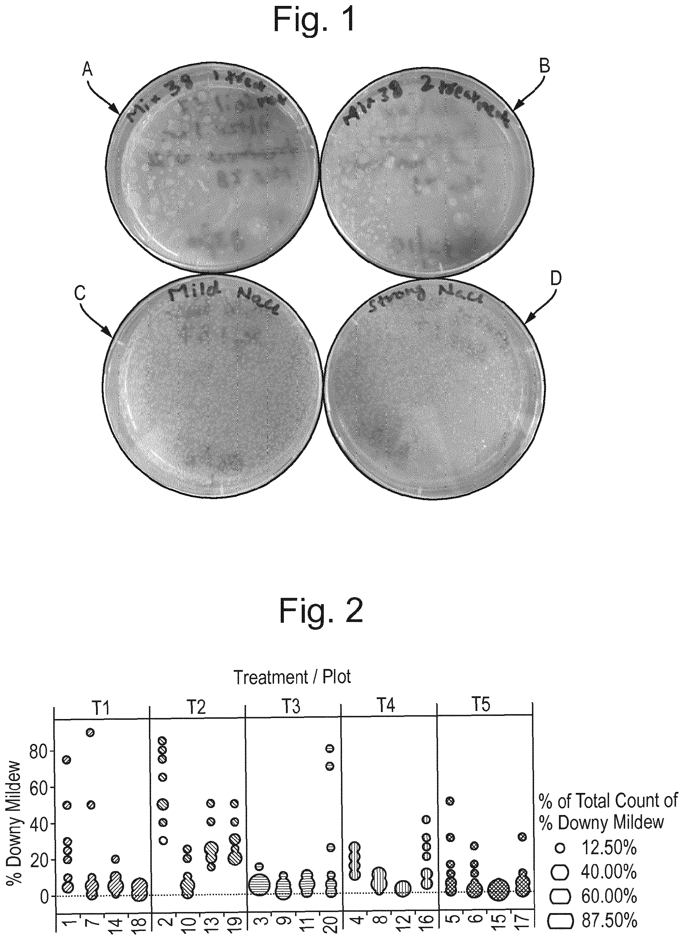

Figures 1A to 1D are photographic images of soil samples infected with *Fusarium.* Figures 1A and 1B are not treated with the composition of Example 1. Figures 1C and 1D are treated with a weak solution and a strong solution of the composition of Example 1 respectively.

Figures 1A and 1B show fungal colony growth as represented by the diffuse large white regions. The dishes of Figures 1C and 1D only show bacterial colony growth as represent by small discrete white regions. The electrolyzed water biocidal composition of Example 1 therefore has a preferential fungicidal effect. It can be seen from these figures that the compositions of the present invention can be used to kill fungicidal activity, such as *Fusarium* and/or other pathogens, while leaving viable bacterial colonies.

The compositions of the present invention may be applied to an agricultural area or crop(s) so as to provide a preferential fungicidal effect whilst leaving the existing structure of the soil bacteria reasonably intact and unaffected. The underlying soil bacteria are needed for decomposition and absorption of nutrients. The compositions of the present invention can be used to treat fungicidal infestations while helping and/or maintaining nutrient absorption at plant roots and therefore improving crop yield whilst not effecting the existing structure of the soil. The compositions of the present invention may be applied within a predetermined dosage range to an agricultural area or crop(s) so as to provide a preferential fungicidal effect whilst leaving the existing structure of the soil reasonably intact and unaffected.

### Example 3 - Treatment of Downy Mildew Infected Lettuce

Downy mildew infected lettuce was treated with five different treatments. Treatment 1: untreated control; Treatment 2 (comparative example): aqueous salt mix composition comprising sodium chloride and sodium carbonate in a ratio by weight of 7:8; Treatment 3: electrolyzed water composition of Example 1; Treatment 4 (comparative example): aqueous salt mix composition comprising sodium chloride and calcium chloride in a ratio by weight of 50:50; and Treatment 5: Revus (known pesticide).

The treatments were applied using a foliar spray. Each treatment group consisted of four replicate plots each containing 8 plants. Each treatment was sprayed onto the plots for 2 minutes. Each treatment was applied weekly for three weeks. Data was collected immediately on harvest. Harvest occurred 3 days after the last application of a treatment. Figure 2 illustrates the degree of crop infection as represented by the percentage of Downy Mildew remaining on the lettuce after treatment. It can be seen that the composition of the present invention (Treatment 3) provides a pesticidal effect and significantly reduce the percentage of Downy Mildew when compared with the untreated control. Treatment 3 performs at least as well as the known pesticide (Treatment 5).

The method of biocidal treatment of a substrate using the composition of the present invention for soil sterilisation has significantly reduced environmental issues compared to conventional methods. In contrast to a number of conventional soil sterilisation methods, the present invention does not require a considerable diesel supply to heat the surface soil, and does not require a large water supply to produce a large volume of steam. Furthermore, the compositions of the present invention provide significant biocidal activity whilst only containing salts which are already present within fertiliser and plant micronutrients. The compositions of the present invention are therefore more environmentally friendly than known biocidal compositions. Furthermore, the compositions of the present invention do not leave any harmful chemical residues on treated food. As such, the compositions of the present invention may be used more frequently, during extended periods of crop production, such as for example closer to crop harvest, and without requiring any additional health and safety protection or equipment.

It is to be understood that the Examples are illustrative of the biocidal properties of the compositions of the present invention. It is to be understood that the compositions of the present invention may be applied in any suitable manner to an agricultural area or crop(s).

Although the above Examples illustrate the use of the compositions of the present invention for the treatment of soil and crops, it is to be understood that the compositions of the present invention may be used in any industry, in particular the agricultural industry, which requires the use of biocidal compositions. For example, the compositions of the present invention may be used to treat any equipment, such as for example irrigation systems, tanks including water tanks, and/or crop treatment equipment as well as water such as for example surface, rain and/or ground water.

### Example 4 - Electrolyzed water composition

An aqueous electrolyte solution comprising 0.3 g/l sodium chloride, 1.6 g/l calcium chloride, 1.3 g/l magnesium nitrate, and 2.8 g/l potassium nitrate in water was prepared. The electrolyte solution was stored within a reservoir chamber in fluid communication with an electrolytic cell.

A feed stream comprising the electrolyte solution was introduced into an electrolytic flow cell. The feed stream can optionally include one or more additional salts to enhance the rehydration properties of the resultant electrolyzed water composition.

The electrolytic cell is a non-membrane electrolytic cell. It is however to be understood that any suitable electrolytic cell may be used.

The electrolytic cell comprises a casing, a plurality of boron doped diamond electrodes (BDEs) located within the cell, and metal 'contact plates' used for transmitting charge across the electrolyte solution.

The BDEs are sheet-like components and are provided in a stack of between 3 and 10 sheets. Each sheet is located at a fixed distance away from an adjacent sheet. The distance between adjacent sheets of BDEs provides a cell gap, which is preferably less than 5 mm, for example between approximately 2 and 3 mm. The BDEs are provided in a plastic frame. The BDEs transmit charge across the electrolyte solution, inducing a strong dipole and creating positively and negatively charged radicals on alternate surfaces of the diamonds.

The electrolyte solution may be introduced into the electrolytic cell in any suitable manner so as to produce electrolyzed water composition in a continuous process or in a batch process. In the continuous process, the electrolyte solution may be introduced at a suitable flow rate, such as for example at a flow rate in the range of from 0.1 to 100 I/min, for example in the range of from 3 to 5 I/min. In the batch process, the electrolyte solution may have a flow rate of approximately 16 l/min.

A power supply was operated to apply a voltage in the range of between 1 and 1,000 Volt D.C. and a current within the range of from 1-1,000 ampere to the electrolyte solution.

The over-potential provided between the electrodes shifts the equilibrium within the electrolyte solution such that a range of 'active species' ions and molecules are produced and remain within the electrolyzed water for a significant amount of time. The term 'significant amount of time' is used herein to refer to at least a week, preferably at least two weeks, for example at least a month. The combination of active molecular and ionic species together with the over-potential which supports the equilibrium confers a variable degree of rehydration activity to the electrolyzed water composition.

The electrolytic cell preferably comprises an outlet through which the electrolyzed water composition exits the cell. The resulting electrolyzed water composition comprises a range of active molecular and ionic species which have enhanced rehydration properties.

The active molecular and ionic species include dissolved ozone and free accessible chlorine (FAC). The electrolyzed water composition according to this embodiment comprises dissolved ozone at a level of approximately 2.5 ppm. The electrolyzed water composition according to this embodiment comprises free accessible chlorine (FAC) at a level of approximately 250 ppm.

Although the electrolyzed water composition of the present invention contains dissolved ozone at a level of approximately 2.5 ppm, it is to be understood that the electrolyzed water composition of the present invention may comprise any suitable level of dissolved ozone within the range of between 0.1 and 750 ppm. Although the electrolyzed water composition of the present invention contains and FAC at a level of approximately 250 ppm, it is to be understood that the electrolyzed water composition of the present invention may comprise any suitable level of FAC within the range of between 10 and 1,000 ppm.

It is also to be understood that the electrolyzed water composition may be varied by varying one or more of: the components of the electrolyte composition, the concentration of the components within the electrolyte composition, the degree of over-potential, the current applied, or any combination thereof. In this way the rehydration properties of the electrolyzed water composition may be tailored to suit different ornamental targets, such as for example flower species, microbial contaminants, delivery mechanisms, and growing environment, or any combination thereof. For example, the rehydration properties of the electrolyzed water composition may be tailored in relation to when the composition is to be applied.

The system may further comprise one or more flow regulators arranged in use to adjust the flow of the electrolyte feed stream between the reservoir and the cell.

The system may further comprise a heater arranged in use to adjust the temperature of the flow of the electrolyte feed stream and/or the electrolyte solution within the cell.

The system may further comprise a control system arranged in use to control the flow rate of the electrolyte feed stream as required, such as for example by controlling the flow regulator(s).

The system may comprise a control system arranged in use to control the power supply to the electrodes.

The system may comprise a control system arranged in use to control the temperature of the electrolyte solution.

Control of the temperature of the electrolyte solution, the flow rate of the electrolyte solution feed stream, and the power supply to the electrodes may be provided by a single control system. Alternatively, these factors may be controlled by separate control systems.

### Example 5 - Rehydration of Cut Flowers

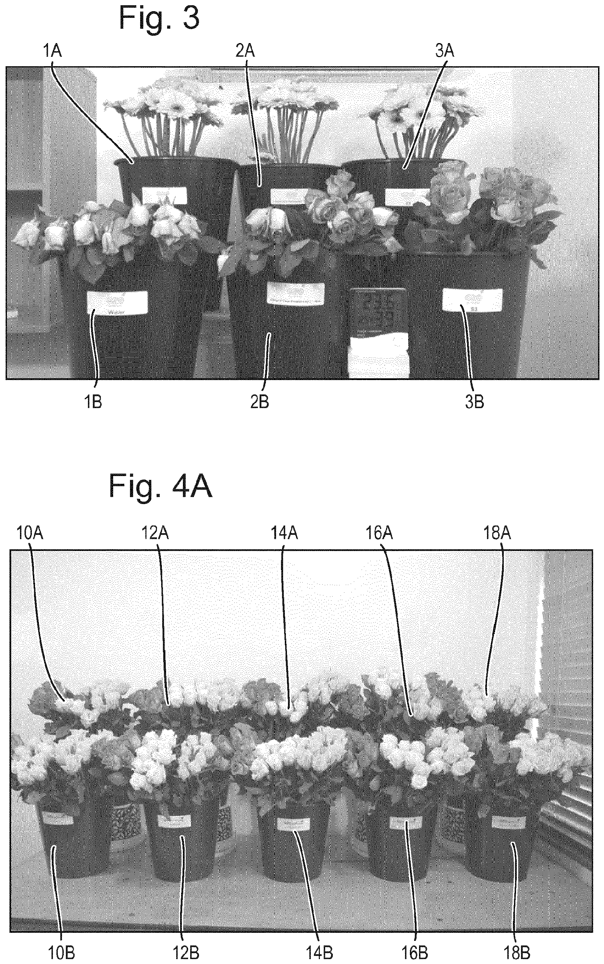

With reference to Figure 3, an experiment was carried out to determine the effect on flowers of being stored in three different rehydration solutions. The flowers were placed in three pairs of buckets. Each pair of buckets contained a different rehydration solution for cut flowers. A first pair of buckets 1A, 1B contained water; a second pair of buckets 2A, 2B contained a conventional rehydration solution (Chrysal Professional T-bag); and a third pair of buckets 3A, 3B contained the Electrolysed Water Composition of Example 4 (5g/l total salts, 250 ppm FAC). A first bucket from each pair of bucket contained gerboras and a second bucket from each pair of buckets contained roses.

The stems of the cut flowers (in this case roses and gerboras) were cut to remove about 2 cm in length. The cut flowers are placed within the buckets containing the corresponding rehydration solution. The flowers remained in the solution for five days at ambient temperature. The results are shown in Figure 3.

As shown in Figure 3, the flowers in the third pair of buckets 3A, 3B are observed to be in a much healthier condition than the flowers placed in either water or in conventional rehydration solution.

The present invention therefore provides compositions with improved rehydration properties for cut flowers compared to conventional rehydration solutions and water.

### Example 6 - Method for handling dry roses

### Rehydration of Roses:

30 bunches of dry roses (10 pink roses, 10 white roses and 10 yellow roses) arrive dry in boxes after import by air from Kenya. The roses are removed from the boxes. 2 cm of length is cut from the base of the stem. Roses are then placed in the corresponding rehydration solution (either a) water or b) the composition of Example 1) with cardboard collars in place. The roses remain in the rehydration solution overnight (approx. 9 hours) at ambient temperature. The rehydrated roses are then removed from the rehydration solution and shipped as bunches. The cardboard collars are discarded at this stage.

### Shop Floor

A further 1 cm is removed from the base of the rehydrated stem. The roses were placed in one of ten buckets (two sets of five buckets). A first set of five buckets (marked B) received the roses which have previously been rehydrated in water, and the other set of five buckets (marked A) received the roses which have previously been rehydrated with the composition of Example 4.

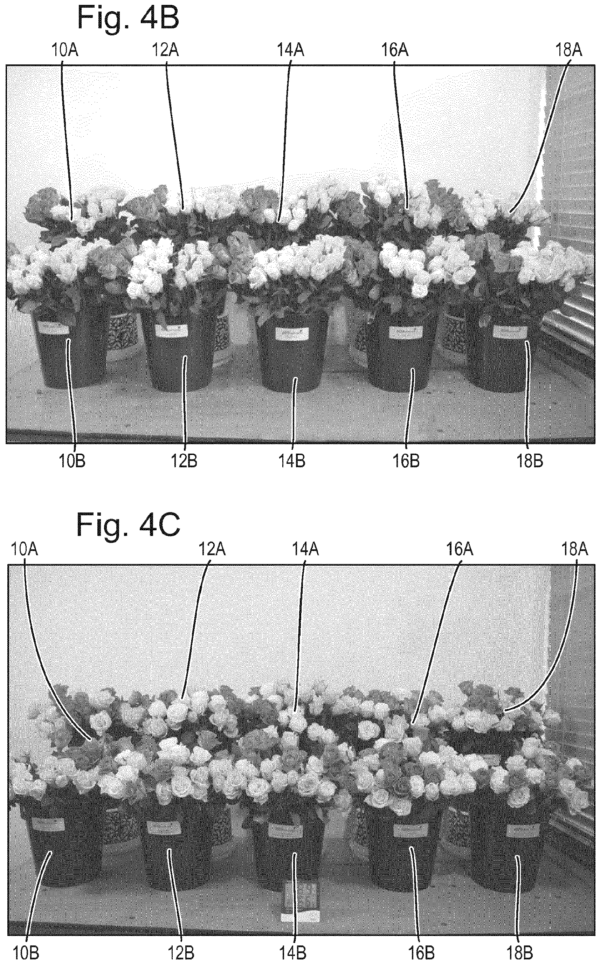

The roses were placed at room temperature (approx. 20 °C) for four days and time lapse photography is initiated (Figures 4A and 4B).

Each set of five buckets comprises 2 litres of one of five different solutions (Ship to Store liquids as shown in Table 1):
1) water 10 A/B;
2) water and proff 2 Crysal T -bag 12 A/B;
3) dilute composition of S1 (1.0 g/l NaCl solution) 14 A/B;
4) dilute composition of Example 4 16 A/B;
5) dilute Composition of Example 4 variant with alternative formulation as shown in Table 1 18 A/B.

**Table 1**

| | Water 10 A/B | T-bag 12 A/B | Dilute S1 14 A/B | Composition of Example 4 | Composition of Example 4 variant |
|---|---|---|---|---|---|
| | | | | 16 A/B | 18 A/B |
| ORP | 305 | 275 | 745 | 490 | 668 |
| FAC (ppm) | 0.31 | 0.11 | 147.8 | 48.4 | 22.8 |

The term "ORP" is used herein to refer to the oxidative reduction potential. The oxidative reduction potential is a measure of the amount of antimicrobial efficacy that an electrolysed water solution contains.

As shown in Figures 4A and 4B show the condition of the rehydrated (either with water or with the composition of Example 4) roses placed in varying solutions. The roses performed well over the period of four days post-rehydration (Figure 4B). The rehydrated roses placed in water (buckets 10 A/B) appear to begin to droop after four days post-rehydration. A few of the roses placed within the water (buckets 10A/B) are also failing to open and a number of petals shrivelled after a period of four days post rehydration treatment.

### Customer Vase

The roses are then transferred to cleaned buckets. The consumer sachet instructions for caring for the roses were followed accordingly for 8 days and again time lapse photography was initiated. The number of wilted flowers were counted for each colour rose within each vase on Day 1 (Table 2), Day 3 (Table 3) and Day 8 (Table 4).

### Day 1:

**Table 2**

| **Rehydration** | **Ship to Store liquid** | | | | |
|---|---|---|---|---|---|
| **Composition of Example 4** | **Water** | **T bag** | **10% S1** | **Composition of Example 4** | **Composition of Example 4 Variant** |
| **Yellow Roses** | 0/10 wilted | 1/10 wilted | 0/10 wilted | 0/10 wilted | 0/10 wilted |
| **White Roses** | 2/6 wilted | 0/8 wilted 1 N/O | 0/9 wilted | 0/9 wilted | 0/9 wilted |
| **Pink Roses** | 0/10 wilted | 0/10 wilted | 0/10 wilted | 0/10 wilted | 0/10 wilted |

| **Water** | **Water** | **T bag** | **10% S1** | **Composition of Example 1** | **Composition of Example 1 Variant** |
|---|---|---|---|---|---|
| **Yellow Roses** | 0/10 wilted | 0/10 wilted | 0/10 wilted | 0/10 wilted | 0/10 wilted |
| **White Roses** | 1/10 wilted 3 N/O | 0/10 wilted | 3/10 wilted¹ | 0/10 wilted | 0/10 wilted |
| **Pink Roses** | 0/10 wilted | 0/10 wilted | 0/10 wilted | 0/10 wilted | 0/10 wilted |

### Day 3

**Table 3**

| **Rehydration** | **Ship to Store liquid** | | | | |
|---|---|---|---|---|---|
| **Composition of Example 4** | **Water** | **T bag** | **10% S1** | **Composition of Example 4** | **Composition of Example 4 Variant** |
| **Yellow Roses** | 10/10 wilted | 4/10 wilted | 2/10 wilted | 0/10 wilted | 0/10 wilted |
| **White Roses** | 4/6 wilted | 1/8 wilted | 0/9 wilted | 0/9 wilted | 0/9 wilted |
| **Pink Roses** | 10/10 wilted | 1/10 wilted | 0/10 wilted | 0/10 wilted | 1/10 wilted |

| **Water** | **Water** | **T bag** | **10% S1** | **Composition of Example 1** | **Composition of Example 1 Variant** |
|---|---|---|---|---|---|
| **Yellow Roses** | 7/10 wilted | 7/10 wilted | 0/10 wilted | 1/10 wilted | 2/10 wilted |
| **White Roses** | 10/10 wilted | 5/10 wilted | 1/10 wilted 3 N/O | 0/10 wilted | 1/10 wilted |
| **Pink Roses** | 10/10 wilted | 8/10 wilted | 1/10 wilted | 0/10 wilted | 2/10 wilted |

### Day 8

**Table 4**

| **Rehydration** | **Ship to Store liquid** | | | | |
|---|---|---|---|---|---|
| **Composition of Example 4** | **Water** | **T bag** | **10% S1** | **Composition of Example 4** | **Composition of Example 4 Variant** |
| **Yellow Roses** | 10/10 wilted | 6/10 wilted | 5/10 wilted | 2/10 wilted | 6/10 wilted |
| **White Roses** | 3/6 wilted | 2/8 wilted | 4/9 wilted | 0/9 wilted | 1/9 wilted |
| **Pink Roses** | 9/10 wilted | 4/10 wilted 1 N/O | 0/10 wilted | 4/10 wilted | 4/10 wilted |

| **Water** | **Water** | **T bag** | **10% S1** | **Composition of Example 1** | **Composition of Example 1 Variant** |
|---|---|---|---|---|---|
| **Yellow Roses** | 10/10 wilted | 6/10 wilted | 0/10 wilted all with shrivelled petals | 4/10 wilted all with shrivelled petals | 6/10 wilted |
| **White Roses** | 10/10 wilted | 5/10 wilted | 8/10 wilted 3 N/O | 1/10 wilted | 3/10 wilted |
| **Pink Roses** | 10/10 wilted | 4/10 wilted | 1/10 wilted all with shrivelled petals | 5/10 wilted | 10/10 wilted |

It was found that roses wilting/drooping was the primary failure, with some roses not opening (N/O). As the blooms aged, the petals become shrivelled or slightly dessicated.

In total, the flower loss after rehydration, 4 days of simulated retail environment, and 8 days of simulated home display was 93% (52/56) for roses rehydrated in water; 48% (28/58) for roses in Chrysal T-Bag solution, and just 27% (16/59) for those stored in the composition of Example 4.

It can therefore be seen that the compositions of the present invention significantly improve the shelf life of cut flowers. The improvement in shelf life obtained by using the compositions of the present invention to rehydrate cut flowers is equivalent to increasing the shelf life of the cut flowers by 2-3 days. It is to be noted that although the present invention provides results for roses, that the compositions of the present invention have a similar effect on other cut flowers. The present invention therefore provides compositions which can be used to increase the shelf life of flowers, to increase the quality of the cut flowers sold to consumers, to increase the effective yield, and thereby reducing the number of guarantee claims brought by customers.

It is to be understood that Examples 4 to 6 are illustrative of the rehydration properties of the compositions of the present invention for roses. It is to be understood that the compositions of the present invention may be applied in any suitable manner to any species of ornamental crop(s) or pathogen.

## Claims

1. An aqueous electrolyte solution comprising at least four salts, in which the at least four salts are selected from:
at least one salt selected from alkali metal chloride, alkali earth metal chloride, and ammonium chloride, or any combination thereof;
at least one salt selected from alkali metal carbonate; alkali earth metal carbonate, and ammonium carbonate, or any combination thereof;
at least one salt selected from alkali metal nitrate, alkali earth metal nitrate, and ammonium nitrate, or any combination thereof; and
at least one salt selected from alkali metal phosphate, alkali earth metal phosphate, and ammonium phosphate, or any combination thereof.

2. An aqueous electrolyte solution as claimed in claim 1, in which the electrolyte solution comprises:
at least one alkali metal chloride salt and at least one alkali earth metal chloride salt;
at least one alkali metal carbonate salt;
at least one alkali metal nitrate salt and at least one alkali earth metal nitrate; and
at least one alkali metal phosphate salt and/or at least one alkali earth metal phosphate salt.

3. An aqueous electrolyte solution comprising:
at least one alkali metal chloride salt and at least one alkali earth metal chloride salt; and
at least one alkali metal nitrate salt and at least one alkali earth metal nitrate salt.

4. An aqueous electrolyte solution as claimed in claim 3, in which the solution comprises:
at least one alkali metal chloride salt;
at least one alkali earth metal chloride salt;
at least one salt selected from alkali metal nitrate; and
at least one salt selected from alkali earth metal nitrate.

5. An aqueous electrolyte solution as claimed in claim 4, in which the solution comprises:
sodium chloride (NaCI) and calcium chloride (CaCl₂);
magnesium nitrate (Mg(NO₃)₂) and one or more alkali metal nitrate selected from: sodium nitrate (NaNO₃) and potassium nitrate (KNO₃), or any combination thereof.

6. A method for producing electrolyzed water composition for agricultural use or for ornamental preservation, the method comprising:
preparing an aqueous electrolyte solution as claimed in any one of claims 1 to 5;
introducing the aqueous electrolyte solution into an electrolytic cell comprising a plurality of boron-doped diamond electrodes; and
operating a power supply to apply a predetermined voltage to the electrolyte solution to produce an electrolyzed water biocidal composition comprising a plurality of active molecular and ionic species having biocidal activity,
in which the salts of the electrolyte are selected such that the electrolyzed water composition comprises a free accessible chlorine (FAC) concentration in the range of from 10 to 10000 ppm, and/or a dissolved O₃ concentration in the range of from 0.1 to 750 ppm.

7. A method as claimed in claim 6, in which the electrolyte solution is introduced into the electrolytic cell in a continuous or batch process manner.

8. A method as claimed in either of claims 6 and 7, in which the predetermined voltage is in the range of between 1 and 1000 volts DC.

9. A method as claimed in any one of claims 6 to 8, in which the power supply has a current in the range of between 1 and 1000 ampere.

10. An apparatus for producing an electrolyzed water composition, the apparatus comprising:
a reservoir comprising an aqueous electrolyte solution as claimed in any one of claims 1 to 5;
an electrolytic flow cell in fluid communication with the reservoir to receive a feed stream comprising the aqueous electrolyte solution; and
a plurality of boron-doped diamond electrodes located within the electrolytic cell and arranged in use to be connected to a power supply.

11. An electrolyzed water composition obtainable by a method as claimed in any one of claims 6 to 9.

12. Use of the electrolyzed water composition as claimed in claim 11 as a biocidal agent; or as a rehydration agent.

13. An applicator for applying an electrolyzed water composition, in which the applicator comprises a reservoir comprising an electrolyzed water composition as claimed in claim 11, and a nozzle in fluid communication with the reservoir.
